# EUROPEAN PATENT SPECIFICATION

(11) **EP 2 732 955 B1**
(45) Date of publication and mention of the grant of the patent: **23.03.2016**
(21) Application number: 13382454.0
(22) Date of filing: 11.11.2013
(51) Int. Cl.: B29C 65/00, B29C 45/16, B60J 1/00, B29L 31/30

(54) **Method for manufacturing a support assembly made of plastic material and a transparent screen made of plastic material and an assembly obtained by means of said method**
Verfahren zur Herstellung eines Stützanordnung aus Kunststoffmaterial und einer transparenten Bildschirm aus Kunststoffmaterial und eine durch das Verfahren erhaltene Baugruppe
Procédé de fabrication d'un ensemble de support en matière plastique, un écran transparent en matière plastique et un ensemble obtenu aux moyens dudit procédé

(30) Priority: 15.11.2012 ES 201231763
(43) Date of publication of application: 21.05.2014
(73) Proprietor: Seat, S.A., 08760 Martorell (ES)
(72) Inventor: Fernandez Gomez, Antonio, 08760 Barcelona (ES)
(74) Representative: Isern-Jara, Nuria

(56) References cited:
- EP-A2- 0 521 825
- EP-A2- 1 111 020
- WO-A1-01/28744
- US-A1- 2004 036 315
- AENGENHEYSTER: "GROSSER MARKT FUER GROSSE SCHEIBEN", PLASTVERARBEITER, HUETHIG GMBH, HEIDELBERG, DE, vol. 55, no. 10, 1 October 2004 (2004-10-01), pages 146-149, XP001204764, ISSN: 0032-1338

## Description

### Field of the Invention

The present invention is encompassed within the field of the automobile industry and more specifically relates to a method for manufacturing a support assembly made of plastic material and a transparent screen made of plastic material and the assembly obtained by said method, wherein said assembly will normally be used on the doors or rear hinged door of a motor vehicle.

### Background of the Invention

Currently, transparent plastic components used in vehicles are known, for example those used in windscreens, in sunroofs or in rear hinged doors. These parts usually include transparent areas and opaque areas, being manufactured by means of co-injection of an opaque plastic and another transparent plastic, usually PC or PMMA (both parts can be made of the same material). The opaque plastic can be used as a support in rear hinged doors, replacing the frame of conventional rear hinged doors. The support is usually injected first and subsequently the transparent screen is overinjected, but this can also be done in reverse order.

One of the methods currently used to integrate the screen with the support into an assembly is by overinjection (the support can partially or totally cover the contour of the screen) or bi-injection of the support screen. By directly joining the screen and the support by the abovementioned methods, both components, as mentioned, are joined inseparably, which is why the screen alone cannot be replaced in the event of breakage or cracking, but rather the full screen/support assembly has to be replaced due to the fusion between the material of the screen, which is usually transparent, and the support material, which is usually opaque.

In the case of co-injecting the material laterally, we find typical problems that occur in joints between two different materials, such as expansion and coherency stresses when the material is cooled. The surface of the support can further be damaged, leaving no choice but to cut over the intersection of the screen and support in order to change one of the two parts.

Additionally, once both parts are detached, mechanisation is subsequently almost always necessary in order to have a clean coupling line for the new part to be assembled.

After forming the screen/support assembly, a surface hardening treatment known as "glazing", consisting of a resin deposited on the plastic, can be applied to protect the plastic surface from abrasion and sunlight. However, materials that do not require the glazing treatment can be used or where the surface simply does not have to be hardened in order to maintain the properties of the material (e.g rubber).

On the other hand, selected areas of the screen and the support can be painted the same colour, or even contiguous areas can be painted with different colours. While the glazing treatment can be applied after painting a surface, it is not feasible to do it in the reverse order due to the actual painting process.

To mark out the areas to be protected, said areas are masked using film or adhesive tape, sticking the tapes or strips manually to the surface of the screen and/or support when painting the screen and/or the support both for painting and any other surface treatment. Logically, manually masking the area takes considerable time in respect of manpower, and furthermore the films or tapes used often generate non-recyclable waste.

Additionally, if the screen and/or support is to be painted in more than one colour, the areas that are not to be painted have to be covered, painting the first colour, removing the part from the paint line, removing or adding the necessary films and tapes and repainting, with the subsequent additional time involved and possible surface imperfections that may occur. On the other hand, manual masking means the borders of the area to be painted are not defined accurately.

In other cases, where no painting of the plastic screens is required, the glazing treatment is carried out prior to the screen being installed in the bodywork, thereby avoiding having to mask the parts that are not to be painted. On the other hand, the screen is installed after painting the support, therefore a seal must be created between the screen and the support using specific plugs and tools to ensure levelling and clearances.

This seal cannot be flush or have clearances close to zero, and the clearance of the latter is quite large.

As an alternative to manual masking, projection techniques (spraying) of a polymer for masking the surface of an area prior to treatment (e.g. paint) are known. The following patents describe techniques/procedures of this type.

Patent WO 2010/127738 describes a method for easily and accurately defining areas to be masked prior to painting. The basic steps the aforementioned method comprises include: applying a thin layer of a cohesive polymer to mask the areas that are not to be painted, painting the part and removing the polymer layer in the areas indicated.

Patent WO 03/072270 specifies that the polymer used for masking contains an aqueous solution or carboxylic acid emulsion, enabling the film to be removed once the part has been painted. Said polymer is preferably a co-acrylic or methacrylic polymer.

Patent EP 1781422 describes that the material used for masking contains a thickener, a pH controlling agent and water. After the surface treatment, the mask can be removed simply by washing with water.

The U.S. patent 5420015, the sprayed material includes a non-volatile polyhydroxy component, said component preferably being polyglycerol, in particular corn syrup. The presence of these compounds inhibits the formation of swelling, blisters or blemishes in the paint. On the other hand, the application of masking during the injection process of the plastic part is also known. The following patent EP 1022116 describes this method, more specifically the method described consists of providing a film (1a) in an area of the mould (3) and subsequently injecting the plastic part into the mould, such that when the part is removed from the mould, it comprises the film (1a) on the part of the component (6) which is to be masked. Once the part has been injected, it is painted and the film (1a) is subsequently lifted.

In the method described in patent EP 1022113, the option for the masking film to be overinjected on a part that has previously been injected is not provided for.

It is also know, by what it is described in the patents US2004/036315A1, EP1111020A2, EPO521825A2, and in the technical literature "GROSSER MARKT FUER GROSSE SCHEIBEN", PLASTVERARBEITER, vol. 55, nº 10, ISSN: 0032-1338, a window made out of plastic. In particular, in the patent WO 01/28744 it is described a window panel for use in automotive glazing applications is described, in which inner planer piece of transparent plastic is bonded to an outer piece molded from an opaque plastic creating a masking border. The two pieces have overlapping portions, and may be of reduced or tapering thickness to create a transition masking zone of reduced or varying opacity. The inner piece may be designed to separate from the outer piece at a lower impact force than that required to fracture the pieces to establish a prescribed failure mode. The window panel may be formed by a two shot molding process in which the inner and outer pieces are molded respectively to increase the overall window panel size beyond that able to be molded by a one shot process.

Therefore, the need to devise a new method of manufacturing screen/support assemblies, which firstly, makes it possible to easily remove the screen from the support in the event of deterioration thereof, and secondly makes it possible to use a film as a masking layer in the process of painting the assembly, which can be applied on previously injected parts and can be easily removed. Similarly, the invention herein protects the screen/support assembly obtained by the aforementioned manufacturing method.

This objective is achieved by the invention as defined in claim 1. The dependent claims define preferred embodiments of the invention.

### Description of the Invention

The invention herein relates to a method for manufacturing a support assembly made of plastic material and a transparent screen made of plastic material characterised in that it comprises the following steps:
- Injecting the support made of plastic material,
   - Overinjecting a spacer made of a material incompatible with the plastic material of the support, on the surface of the support, wherein the transparent screen made of plastic material will be overinjected.
   - Overinjecting the transparent screen made of plastic material, at least one portion of its outermost edge overlapping with the surface of the support where the spacer is, said spacer being positioned between the support and the transparent screen.

In this manner, the manufacturing method described primarily has two advantages, the first of which is the addition of what has been referred to as a spacer, which is merely an intermediate material chemically incompatible with the materials the support is composed of. In other words, it can be detached from the support as it is not built-in, from the molecular viewpoint, in the material of the support during the overinjection stage. This characteristic means that if a breakage or crack occurs on the screen, and therefore said screen needs to be replaced with a new screen, it will be relatively easy to detach said screen of the support because the spacer acts as an intermediate material and is not integrated molecularly with the support, the debris from the spacer can be easily removed from the edge or inner edge of the support without the need for additional machining thereof, and therefore prevents damage and deterioration of said support during the process of changing the screen. Once the deteriorated screen has been removed, a special glue is used to secure the new screen.

In this way, and by using the spacer, in the event of the screen deteriorating, the screen can be changed and there is no need to replace the full screen/support assembly, thereby substantially saving on repair costs for the user of the vehicle in case of such deterioration.

In another aspect of the invention, the support made of plastic material may comprise at least one predetermined break point on the surface of the support wherein the spacer is overinjected. At least one predetermined break point can be positioned at an outermost edge of the support surface wherein the spacer is overinjected.
Thanks to the aforementioned predetermined break points, their configuration and arrangement in respect of the support and the transparent screen, detaching the transparent screen from the support will be easier when it is necessary to replace the screen due to breakage or deterioration thereof, since said predetermined break points are merely weakened areas located in the support, thereby requiring less force to detach the screen from the support.

In another aspect of the invention, the spacer may be made of silicone or EPDM with PP.

In another aspect of the invention, the manufacturing method may further comprise a stage of overinjecting a protective film, particularly silicone or PVC, on at least one portion of the support made of plastic material and/or the transparent screen made of plastic material.

By using this protective film, manual masking is replaced, thereby greatly decreasing the time taken for painting or other similar surface treatments or transport of the support/screen assembly, and avoiding the problems mentioned above.

Advantageously, the overinjection stages of the manufacturing method may be carried out in a rotary mould.

The object of the invention herein is also a support assembly made of injected plastic material and a transparent screen made of plastic material, manufactured according to the abovementioned method, wherein said assembly comprises a spacer made of a material incompatible with the plastic material of the support, overinjected on a support surface where the transparent screen made of plastic material is overinjected over at least one portion of its outermost edge overlapping with the surface (7) of the support (1) where the spacer (2) is, said spacer (2) being positioned between the support (1) and the transparent screen (3).

If a breakage or crack occurs on the screen of the support/screen assembly described herein, and therefore said screen needs to replaced with a new screen, it will be relatively easy to detach the screen of the support because the intermediate spacer is not integrated molecularly with the support, and therefore the debris
from the spacer can be easily removed from the edge or inner edge of the support without the need for additional machining thereof, preventing damage and deterioration of said support during the process of changing the screen.

In another aspect of the invention, the support made of plastic material may comprise at least one predetermined break point on the surface of the support wherein the spacer is overinjected. More specifically, and advantageously, at least one predetermined break point can be positioned at an outermost edge of the surface of the support wherein the spacer is overinjected.

In a final aspect of the invention, the screen/support assembly may further comprise a protective film, particularly silicone or PVC, overinjected onto at least one portion of the support made of plastic material and/or the transparent screen made of plastic material.

### Description of the drawings

Described very briefly hereinafter are a series of drawings that help to better understand the invention and which are expressly related to an embodiment of said invention that is presented as a non-limiting example thereof.

Figure 1 shows a partial section view of one of the joint areas of the support made of plastic material and the transparent screen made of plastic material that form part of the assembly, object of the invention herein.

Figure 2 shows a block diagram that includes the various steps that comprise the method for manufacturing a support assembly made of plastic material and a transparent screen made of plastic material, object of the invention herein.

In the figures mentioned above, a number of references that correspond to the items listed below are identified, including but not limited to:
1. Support made of plastic material
2. Spacer
3. Transparent screen made of plastic material
4. Transparent screen/support assembly
5. Protective film
6. Predetermined break point
7. Support surface where the spacer is overinjected.
10. Support injection
11. Rotation of the mould, change of material and movement of slides
12. Overinjection of the spacer
13. Rotation of the mould, change of material and movement of slides
14. Overinjection of the transparent screen
15. Rotation of the mould, change of material and movement of slides
16. Overinjection of the film
17. Mould opening
18. Removal of the part

### Detailed description of the Invention

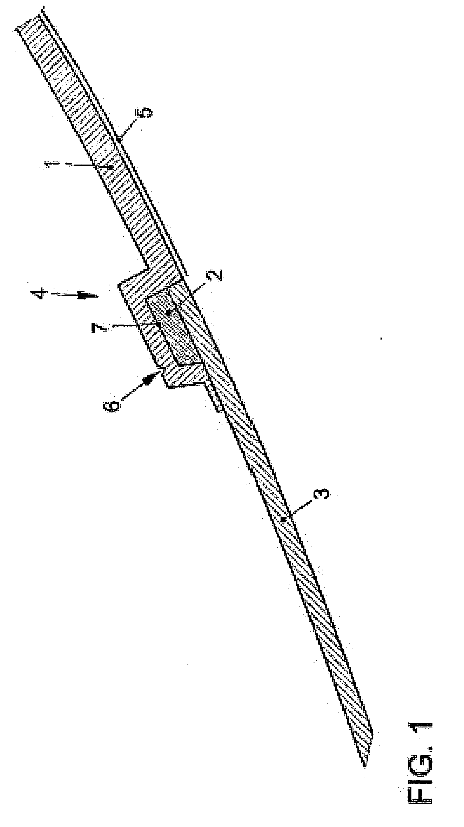

Figure 1 shows one of the joint areas between a support 1 made of a plastic material and a transparent screen 3 made of a plastic material, the support 1 may be, for example, the chassis or frame of a rear hinged door of a motor vehicle and the transparent screen 3 will be the window of said hinged door. As shown in Figure 1, the edges of the support 1 and the transparent screen 3 are overlapped with each other such that they can be joined, in particular, the support 1 has a U-shaped top such that the free end of the edge is arranged below the surface 7 of the support 1 at a distance equal to the thickness of the transparent screen 3, so the transparent screen 3 is positioned coplanar to the surface 7 of said support 1 when it overlaps with the support 1.

A spacer 2 is deposited on the top of the support 1, which fills the gap between said top and the transparent screen 3. The chemical composition of the spacer 2 will be such that it is chemically incompatible with the plastic of the support 1, specifically the spacer 2 will consist of silicone or EPDM with·PP, or a material that is chemically similar. The joint areas of the support 1 with the transparent screen 3 may cover the entire length of the perimeter of the support, i.e. the spacer 2 may be continuous or said areas may partially cover the length of the aforementioned perimeter of the support 1, namely that the spacer 2 may be discontinuous.

Another characteristic of the invention is that the support 1 comprises at least one predetermined break point 6 on the surface 7 of the support 1, said predetermined break point 6 being positioned right on the top, in the immediate area surrounding the free end of the edge of the support 1, as shown in figure 1, therefore, the predetermined break points 6, coincide in position with the points where the spacer 2 has been overinjected on the support 1.

Additionally, in order to prepare the support/screen assembly for a possible subsequent treatment of the surface thereof, such as painting, a protective film 5 is overinjected on at least one portion of the support 1 and/or the transparent screen 3, the chemical composition of said protective film 5 advantageously being silicone or PVC, such that it can be easily detached from the support 1 and the transparent screen 3, once all painting or surface treatment that the outer surface of the assembly has been subjected to is completed.

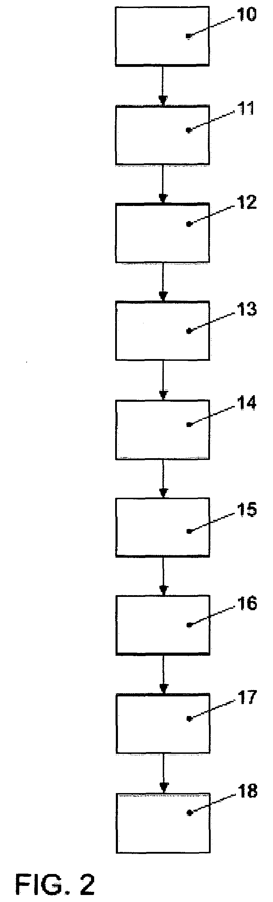

In respect of the method for manufacturing the support/screen assembly, which is also object of the invention herein, said method is represented by a block diagram in Figure 2. The method involves the following steps: injection of the support 10, rotation of the mould, change of material and movement of slides 11, overinjection of the spacer 12, rotation of the mould, change of material and movement of slides 13, overinjection of the transparent screen 14, rotation of the mould, change of material and movement of slides 15, overinjection of the film 16, opening of the mould and removal of the support/screen assembly 18.

## Claims

1. A method for manufacturing a support assembly (4) made of injected plastic material and a transparent screen (3) made of plastic material **characterised in that** it comprises the following steps:
- Injecting (10) the support (1) made of plastic material,
- Overinjecting (12) a spacer (2) made of a material incompatible with the plastic material of the support (1), onto at least parts of a surface (7) of the support (1) where on the transparent screen (3) made of plastic material will be overinjected in the later
- Overinjecting (14) the transparent screen (3) made of plastic material onto at least parts of the outer edge of the support (1) surface and at least parts of the spacer (2) as well, while at least one portion of the transparent screen's (3) outermost edge is overlapping with the surface (7) of the support (1) where the spacer (2) is, while said spacer (2) being positioned between the support (1) and the transparent screen (3).

2. A method for manufacturing a support (1) assembly (4) made of plastic material and a transparent screen (3) made of plastic material according to claim 1, **characterised in that** the support (1) made of plastic material comprises at least one predetermined break point (6) on the surface (7) of the support (1) wherein the spacer (2) is overinjected.

3. A method for manufacturing a support (1) assembly (4) made of plastic material and a transparent screen (3) made of plastic material according to any one of the claims 1 to 2, **characterised in that** at least one predetermined break point (6) is positioned at an outermost edge of the surface (7) of the support (1) wherein the spacer (2) is overinjected.

4. A method for manufacturing a support (1) assembly (4) made of plastic material and a transparent screen (3) made of plastic material according to any one of the claims 1 or 3, **characterised in that** the spacer (2) is silicone or EPDM with PP.

5. A method for manufacturing a support (1) assembly (4) made of plastic material and a transparent screen (3) made of plastic material according to claim 1, **characterised in that** it further comprises a step involving overinjection (16) of a protective film (5), in particular silicone or PVC, on at least one portion of the support (1) made of plastic material and/or the transparent screen (3) made of plastic material.

6. A method for manufacturing a support (1) assembly (4) made of plastic material and a transparent screen (3) made of plastic material according to any one of the claims 1 to 5, **characterised in that** the steps in the manufacturing method are carried out in a rotary mould.

7. A support assembly (4) made of injected plastic material and a transparent screen (3) made of plastic material, **characterised in that** comprises:
- an injected support (1) made of plastic material,
- a spacer (2) made of a material incompatible with the support (1), overinjected onto at least parts of a surface (7) of the support (1)
- wherein a transparent screen (3) made of plastic material is overinjected onto at least parts of the outer edge of the support (1) surface and at least parts of the spacer (2) as well, while at least one portion of the transparent screen's (3) outermost edge is overlapping with the surface (7) of the support (1) where the spacer (2) is, while said spacer (2) being positioned between the support (1) and the transparent screen (3).

8. A support (1) assembly (4) made of plastic material and a transparent screen (3) made of plastic material according to claim 7, **characterised in that** the support (1) made of plastic material comprises at least one predetermined break point (6) on the surface (7) of the support (1) wherein the spacer (2) is overinjected.

9. A support (1) assembly (4) made of plastic material and a transparent screen (3) made of plastic material according to any one of the claims 7 to 8, **characterised in that** at least one predetermined break point (6) is positioned at an outermost edge of the surface (7) of the support (1) wherein the spacer (2) is overinjected.

10. A support (1) assembly (4) made of plastic material and a transparent screen (3) made of plastic material according to any one of the claims 7 or 9, **characterised in that** the spacer (2) is silicone or EPDM with PP.

11. A support (1) assembly (4) made of plastic material and a transparent screen (3) made of plastic material according to claim 7, **characterised in that** it further comprises a protective film (5), in particular silicone or PVC, overinjected on at least one portion of the support (1) made of plastic material and/or the transparent screen (3) made of plastic material.

## Patentansprüche

1. Verfahren zum Herstellen einer Trägerbaugruppe (4) aus gespritztem Kunststoffmaterial und eines transparenten Schirms (3) aus Kunststoffmaterial, **dadurch gekennzeichnet, dass** es folgende Schritte umfasst:
- Spritzen (10) des Trägers (1) aus Kunststoffmaterial,
- Überspritzen (12) eines Abstandshalters (2) aus einem Material, das mit dem Kunststoffmaterial des Trägers (1) inkompatibel ist, auf wenigstens Teile einer Oberfläche (7) des Trägers (1), worauf der transparente Schirm (3) aus Kunststoffmaterial später überspritzt werden wird,
- Überspritzen (14) des transparenten Schirms (3) aus Kunststoffmaterial auf wenigstens Teile des Außenrands der Oberfläche des Trägers (1) und wenigstens Teile des Abstandshalters (2), wobei wenigstens ein Teil des äußersten Rands des transparenten Schirms (3) mit der Oberfläche (7) des Trägers (1), wo sich der Abstandshalter (2) befindet, überlappt, wobei der Abstandshalter (2) zwischen dem Träger (1) und dem transparenten Schirm (3) angeordnet ist.

2. Verfahren zum Herstellen einer Träger(1)-Baugruppe (4) aus Kunststoffmaterial und eines transparenten Schirms (3) aus Kunststoffmaterial gemäß Anspruch 1, **dadurch gekennzeichnet, dass** der Träger (1) aus Kunststoffmaterial wenigstens einen vorbestimmten Bruchpunkt (6) an der Oberfläche (7) des Trägers (1), worauf der Abstandshalter (2) überspritzt ist, aufweist.

3. Verfahren zum Herstellen einer Träger(1)-Baugruppe (4) aus Kunststoffmaterial und eines transparenten Schirms (3) aus Kunststoffmaterial gemäß einem der Ansprüche 1 bis 2, **dadurch gekennzeichnet, dass** wenigstens ein vorbestimmter Bruchpunkt (6) an dem äußersten Rand der Oberfläche (7) des Trägers (1), worauf der Abstandshalter (2) überspritzt ist, angeordnet ist.

4. Verfahren zum Herstellen einer Träger(1)-Baugruppe (4) aus Kunststoffmaterial und eines transparenten Schirms (3) aus Kunststoffmaterial gemäß einem der Ansprüche 1 oder 3, **dadurch gekennzeichnet, dass** der Abstandshalter (2) aus Silicon oder EPDM mit PP besteht.

5. Verfahren zum Herstellen einer Träger(1)-Baugruppe (4) aus Kunststoffmaterial und eines transparenten Schirms (3) aus Kunststoffmaterial gemäß Anspruch 1, **dadurch gekennzeichnet, dass** es ferner einen Schritt umfasst, der Überspritzes (16) eines Schutzfilms (5), insbesondere Silicon oder PVC, auf wenigstens einen Teil des Trägers (1) aus Kunststoffmaterial und/oder des transparenten Schirms (3) aus Kunststoffmaterial umfasst.

6. Verfahren zum Herstellen einer Träger(1)-Baugruppe (4) aus Kunststoffmaterial und eines transparenten Schirms (3) aus Kunststoffmaterial gemäß einem der Ansprüche 1 bis 5, **dadurch gekennzeichnet, dass** die Schritte bei dem Herstellungsverfahren in einem Dreh-Formwerkzeug durchgeführt werden.

7. Trägerbaugruppe (4) aus gespritztem Kunststoffmaterial und transparenter Schirm (3) aus Kunststoffmaterial, **dadurch gekennzeichnet, dass** sie umfassen:
- einen gespritzten Träger (1) aus Kunststoffmaterial,
- einen Abstandshalter (2) aus einem Material, das mit dem Träger (1) inkompatibel ist, überspritzt auf wenigstens Teile einer Oberfläche (7) des Trägers (1),
wobei ein transparenter Schirm (3) aus Kunststoffmaterial auf wenigstens Teile des Außenrands der Oberfläche des Trägers (1) und wenigstens Teile des Abstandshalters (2) überspritzt ist, wobei wenigstens ein Teil des äußersten Rands des transparenten Schirms (3) mit der Oberfläche (7) des Trägers (1), wo sich der Abstandshalter (2) befindet, überlappt, wobei der Abstandshalter (2) zwischen dem Träger (1) und dem transparenten Schirm (3) angeordnet ist.

8. Träger(1)-Baugruppe (4) aus Kunststoffmaterial und transparenter Schirm (3) aus Kunststoffmaterial gemäß Anspruch 7, **dadurch gekennzeichnet, dass** der Träger (1) aus Kunststoffmaterial wenigstens einen vorbestimmten Bruchpunkt (6) an der Oberfläche (7) des Trägers (1), worauf der Abstandshalter (2) überspritzt ist, aufweist.

9. Träger(1)-Baugruppe (4) aus Kunststoffmaterial und transparenter Schirm (3) aus Kunststoffmaterial gemäß einem der Ansprüche 7 bis 8, **dadurch gekennzeichnet, dass** wenigstens ein vorbestimmter Bruchpunkt (6) an dem äußersten Rand der Oberfläche (7) des Trägers (1), worauf der Abstandshalter (2) überspritzt ist, angeordnet ist.

10. Träger(1)-Baugruppe (4) aus Kunststoffmaterial und transparenter Schirm (3) aus Kunststoffmaterial gemäß einem der Ansprüche 7 oder 9, **dadurch gekennzeichnet, dass** der Abstandshalter (2) aus Silicon oder EPDM mit PP besteht.

11. Träger(1)-Baugruppe (4) aus Kunststoffmaterial und transparenter Schirm (3) aus Kunststoffmaterial gemäß Anspruch 7, **dadurch gekennzeichnet, dass** sie ferner einen Schutzfilm (5), insbesondere Silicon oder PVC, umfassen, der auf wenigstens einen Teil des Trägers (1) aus Kunststoffmaterial und/oder des transparenten Schirms (3) aus Kunststoffmaterial überspritzt ist.

## Revendications

1. Procédé de fabrication d'un assemblage (4) d'un support constitué de matière plastique injectée et d'un écran transparent (3) constitué de matière plastique **caractérisé en ce qu'**il comprend les étapes suivantes :
- injecter (10) le support (1) constitué de matière plastique,
- surinjecter (12) une entretoise (2) constituée d'un matériau incompatible avec la matière plastique du support (1), sur au moins des parties d'une surface (7) du support (1) sur laquelle l'écran transparent (3) constitué de matière plastique sera surinjecté par la suite,
- surinjecter (14) l'écran transparent (3) constitué de matière plastique sur au moins des parties du bord extérieur de la surface du support (1) et également au moins des parties de l'entretoise (2), pendant qu'au moins une partie du bord le plus extérieur de l'écran transparent (3) chevauche la surface (7) du support (1) où se trouve l'entretoise (2), alors que ladite entretoise (2) est positionnée entre le support (1) et l'écran transparent (3).

2. Procédé de fabrication d'un assemblage (4) d'un support (1) constitué de matière plastique et d'un écran transparent (3) constitué de matière plastique selon la revendication 1, **caractérisé en ce que** le support (1) constitué de matière plastique comprend au moins un point de rupture prédéterminé (6) sur la surface (7) du support (1) dans laquelle l'entretoise (2) est surinjectée.

3. Procédé de fabrication d'un assemblage (4) d'un support (1) constitué de matière plastique et d'un écran transparent (3) constitué de matière plastique selon l'une quelconque des revendications 1 et 2, **caractérisé en ce qu'**au moins un point de rupture prédéterminé (6) est positionné à un bord le plus extérieur de la surface (7) du support (1) dans laquelle l'entretoise (2) est surinjectée.

4. Procédé de fabrication d'un assemblage (4) d'un support (1) constitué de matière plastique et d'un écran transparent (3) constitué de matière plastique selon l'une quelconque des revendications 1 à 3, **caractérisé en ce que** l'entretoise (2) est du silicone ou de l'EPDM avec du PP.

5. Procédé de fabrication d'un assemblage (4) d'un support (1) constitué de matière plastique et d'un écran transparent (3) constitué de matière plastique selon la revendication 1, **caractérisé en ce qu'**il comprend en outre une étape impliquant la surinjection (16) d'un film protecteur (5), en particulier en silicone ou PVC, sur au moins une partie du support (1) constitué de matière plastique et/ou de l'écran transparent (3) constitué de matière plastique.

6. Procédé de fabrication d'un assemblage (4) d'un support (1) constitué de matière plastique et d'un écran transparent (3) constitué de matière plastique selon l'une quelconque des revendications 1 à 5, **caractérisé en ce que** les étapes du procédé de fabrication sont réalisées dans un moule rotatif.

7. Assemblage (4) d'un support constitué de matière plastique et d'un écran transparent (3) constitué de matière plastique, **caractérisé en ce qu'**il comprend :
- un support injecté (1) constitué de matière plastique,
- une entretoise (2) constituée d'un matériau incompatible avec le support (1), surinjectée sur au moins des parties d'une surface (7) du support (1),
- dans lequel un écran transparent (3) constitué de matière plastique est surinjecté sur au moins des parties du bord extérieur de la surface du support (1) et également au moins des parties de l'entretoise (2), pendant qu'au moins une partie du bord le plus extérieur de l'écran transparent (3) chevauche la surface (7) du support (1) où se trouve l'entretoise (2), alors que ladite entretoise (2) est positionnée entre le support (1) et l'écran transparent (3).

8. Assemblage (4) d'un support (1) constitué de matière plastique et d'un écran transparent (3) constitué de matière plastique selon la revendication 7, **caractérisé en ce que** le support (1) constitué de matière plastique comprend au moins un point de rupture prédéterminé (6) sur la surface (7) du support (1) dans laquelle l'entretoise (2) est surinjectée.

9. Assemblage (4) d'un support (1) constitué de matière plastique et d'un écran transparent (3) constitué de matière plastique selon l'une quelconque des revendications 7 et 8, **caractérisé en ce qu'**au moins un point de rupture prédéterminé (6) est positionné à un bord le plus extérieur de la surface (7) du support (1) dans laquelle l'entretoise (2) est surinjectée.

10. Assemblage (4) d'un support (1) constitué de matière plastique et d'un écran transparent (3) constitué de matière plastique selon l'une quelconque des revendications 7 ou 9, **caractérisé en ce que** l'entretoise (2) est du silicone ou de l'EPDM avec du PP.

11. Assemblage (4) d'un support (1) constitué de matière plastique et d'un écran transparent (3) constitué de matière plastique selon la revendication 7, **caractérisé en ce qu'**il comprend en outre un film protecteur (5), en particulier en silicone ou PVC, surinjecté sur au moins une partie du support (1) constitué de matière plastique et/ou de l'écran transparent (3) constitué de matière plastique.
